# EUROPÄISCHE PATENTANMELDUNG

(11) **EP 2 410 757 A2**
(43) Veröffentlichungstag der Anmeldung: **25.01.2012**
(21) Anmeldenummer: 11173948.8
(22) Anmeldetag: 14.07.2011
(51) Int. Cl.: H04N 21/472, H04N 21/2343, H04N 21/81

(54) **Verfahren zur Übertragung von Bilddaten eines virtuellen Objekts, insbesondere eines Militärfahrzeugs und/oder einer Waffe, und Verfahren zur Montage an einem technischen Objekt**

(30) Priorität: 21.07.2010 DE 102010036544
(71) Anmelder: Krauss-Maffei Wegmann GmbH & Co. KG, 80997 München (DE)
(72) Erfinder: Pabst, Manuel, 80997 München (DE); Haubner, Dr. Michael, 80997 München (DE)
(74) Vertreter: Feder Walter Ebert

(57) **Zusammenfassung**

Verfahren zur Montage an einem technischen Objekt, insbesondere einem militärischen Fahrzeug und/oder einer Waffe, sowie Verfahren zur Übertragung von Bilddaten eines virtuellen Objekts (9), insbesondere eines militärischen Fahrzeugs und/oder einer Waffe, von einem Server zu einem Client, wobei ein Benutzer auf der Seite des Clients eine Ansicht des Objekts (9) auswählt, wobei der dieser Ansicht entsprechende Ansicht-Datensatz von dem Server erzeugt wird, wobei der Ansicht-Datensatz mindestens zwei Bilddaten enthaltende Detailstufen-Datensätze umfasst, die unterschiedlich aufgelösten Bildern der gleichen Ansicht entsprechen, wobei zunächst der Detailstufen-Datensatz des Bilds mit der niedrigeren Auflösung und danach der Detailstufen-Datensatz des Bilds mit der höheren Auflösung von dem Server an den Client übertragen wird und wobei der Detailstufen-Datensatz des höher aufgelösten Bilds zur Reduktion der übertragenen Bilddatenmenge eine Referenz auf die Bilddaten in dem Detailstufen-Datensatz des niedriger aufgelösten Bilds umfasst.

## Beschreibung

Die Erfindung betrifft ein Verfahren zur Übertragung von Bilddaten eines virtuellen Objekts, insbesondere eines militärischen Fahrzeugs und/oder einer Waffe, von einem Server zu einem Client sowie ein Verfahren zur Montage an einem technischen Objekt, insbesondere an einem militärischen Fahrzeug und/oder einer Waffe.

Die Erfindung kann eingesetzt werden bei der Montage an einem technischen Objekt, beispielsweise einem militärischen Fahrzeug und/oder einer Waffe. Im Sinne der Erfindung kann die Montage sowohl die Wartung, Instandhaltung, Reparatur, Instandsetzung und Nachrüstung eines technischen Objekts umfassen.

Insbesondere an militärischen Fahrzeugen und/oder Waffen müssen oft Arbeiten zur Wartung und Instandhaltung durchgeführt werden. Zudem werden nach Einsätzen der Fahrzeuge und/oder Waffen Reparaturen oder Instandsetzungsarbeiten notwendig, die direkt vor Ort erledigt werden müssen. Oftmals müssen an den jeweiligen technischen Objekten auch situationsabhängige Nachrüstungs- oder Montagearbeiten vorgenommen werden.

Bei der Durchführung dieser Arbeiten ist es von Vorteil, wenn der Monteur am Einsatzort auf Konstruktionszeichnungen des jeweiligen Objekts und/oder Darstellungen des Montagevorgangs zurückgreifen kann. Bislang muss der Monteur dazu die jeweiligen Zeichnungen und/oder Darstellungen in Papierform mit sich führen. Alternativ können die Zeichnungen und/oder Darstellungen dem Monteur auch in elektronischer Form, beispielsweise auf einem transportablen Computer gespeichert, vorliegen. Dabei können dem Monteur am Rechner auch CAD (Computer Aided Design)-Modelle der Objekte, an denen Arbeiten vorgenommen werden, zur Verfügung gestellt werden, die er z.B. im Sinne einer dreidimensionalen, virtuellen Montageanleitung verwenden kann.

Allerdings besteht dadurch, dass Informationen über die Konstruktion des Fahrzeugs und/oder der Waffe am Einsatzort in Papier- oder elektronischer Form vorliegen, ein erhöhtes Risiko, dass diese sicherheitsrelevanten Daten entwendet werden.

Aufgabe der Erfindung ist es, eine erhöhte Sicherheit der Darstellungen zur Unterstützung der Arbeiten an militärischen Fahrzeugen und/oder Waffen am Einsatzort bei gleichzeitig ausreichender Verfügbarkeit der Daten zu gewährleisten.

Gelöst wird diese Aufgabe durch ein Bildübertragungsverfahren mit den Merkmalen des Patentanspruchs 1 und ein Verfahren zur Montage mit den Merkmalen des Patentanspruchs 17. Vorteilhafte Weiterbildungen der Erfindung sind in den abhängigen Ansprüchen beschrieben.

Gemäß der Erfindung wird ein Verfahren zur Übertragung von Bilddaten eines virtuellen Objekts, insbesondere eines militärischen Fahrzeugs und/oder einer Waffe, von einem Server zu einem Client vorgeschlagen, wobei ein Benutzer auf der Seite des Clients eine Ansicht des Objekts auswählt, wobei der dieser Ansicht entsprechende Ansicht-Datensatz von dem Server erzeugt wird, wobei der Ansicht-Datensatz mindestens zwei Detailstufen-Datensätze mit Bilddaten umfasst, die unterschiedlich aufgelösten Bildern der gleichen Ansicht entsprechen, wobei zunächst der Detailstufen-Datensatz des Bilds mit der niedrigeren Auflösung und danach der Detailstufen-Datensatz des Bilds mit der höheren Auflösung von dem Server an den Client übertragen wird und wobei der Detailstufen-Datensatz des höher aufgelösten Bilds zur Reduktion der übertragenen Bilddatenmenge eine Referenz auf die Bilddaten in dem Detailstufen-Datensatz des niedriger aufgelösten Bilds umfasst.

Besonders vorteilhaft kann die Erfindung somit bei der Wartung von militärischen Fahrzeugen und/oder Waffen am Einsatzort eingesetzt werden. Dazu werden Bild-, Video- oder CAD-Daten zwischen einem Client am Einsatzort des Objekts und einem Server fernab des Einsatzortes z.B. über eine Satellitenverbindung ausgetauscht. Der insbesondere portable Client kann als Computer mit Anzeige ausgestaltet sein. Auch eine Ausgestaltung des Clients als tragbarer Tablet-Computer insbesondere mit einer berührungsempfindlichen Anzeige ist möglich. Als Server kann ein Computer verwendet werden, der über eine ausreichende Rechenleistung zur Berechung der zu übertragenen Ansichten verfügt.

Dabei kann der Benutzer dieses Bildübertragungssystems bei Arbeiten an dem jeweiligen Objekt eine Ansicht des Objekts, insbesondere eines CAD-Modells auswählen und diese im Sinne einer interaktiven Montageanleitung benutzen. Es ist möglich, das virtuelle Objekt in einer dreidimensionalen Darstellung anzuzeigen und interaktiv von verschiedenen Seiten zu betrachten. Das erfindungsgemäße Verfahren kann bei der Datenfernübertragung eingesetzt werden. Ferner können neben Bild-, Video- und CAD-Daten auch weitere für die Arbeiten an dem Objekt relevante Daten, insbesondere Text- oder Audiodaten, ausgetauscht werden.

Durch das erfindungsgemäße Bildübertragungsverfahren kann eine schnelle Unterstützung des Monteurs unabhängig vom Einsatzort gewährleistet werden. Zudem können sensible Konstruktionsdaten wirksam geschützt werden, da lediglich Bilddaten des Objekts, die zur Anzeige auf dem Client erforderlich sind, übertragen werden. Die Konstruktionsdaten, insbesondere die CAD-Daten des Fahrzeugs und/oder der Waffe verbleiben auf dem Server. Sie stehen am Einsatzort auf der Anzeige des Clients nur dann zur Verfügung, wenn eine Verbindung zu dem Server hergestellt ist.

Um Arbeiten an militärischen Fahrzeugen und/oder Waffen auch an entlegenen Orten zu ermöglichen, kann für die Übertragung der Bilddaten von dem Server zu dem Client eine drahtlose Verbindung eingesetzt werden. Beispielsweise kann eine drahtlose Verbindung über eine Satellitenverbindung mit relativ niedriger Bandbreite hergestellt werden. Dabei ist es vorteilhaft, die für die Darstellung der Bilddaten eines virtuellen Objekts zumeist sehr große Datenmenge zu reduzieren, um die Interaktivität nicht über Gebühr einzuschränken.

Bei dem erfindungsgemäßen Bildübertragungsverfahren kann der Server die von dem Benutzer ausgewählte Ansicht durch Rendering der CAD-Rohdaten erzeugen. Die gerenderten Bilddaten können in Detailstufen-Datensätzen strukturiert sein. Die Menge der übertragenen Bilddaten kann dabei reduziert werden, indem in einem Detailstufen-Datensatz eine Referenz auf bereits übertragene Bilddaten eines Detailstufen-Datensatzes mit niedrigerer Auflösung übertragen wird. Die Referenz kann nach Art eines Zeigers auf eine Adresse von Bilddaten des vorhergehend übertragenen Detailstufen-Datensatzes zeigen.

Ferner können die Bilddaten bei dem erfindungsgemäßen Verfahren schrittweise mit zunehmender Auflösung übertragen werden. Durch diese inkrementelle Übertragung der Bilddaten wird ein Verfahren ermöglich, bei dem eine niedrig aufgelöste Ansicht des virtuellen Objekts auf der Seite des Clients bereits empfangen und angezeigt werden kann, bevor der gesamte zu dieser Ansicht gehörige Ansicht-Datensatz vom Server zum Client übertragen wurde. Somit kann dem Benutzer schnell eine erste Ansicht des virtuellen Objekts zur Verfügung gestellt werden. Diese Ansicht kann mit fortlaufender Übertragung durch höher aufgelöste Bilder der gleichen Ansicht ersetzt werden, die dem Benutzer eine detailreichere Darstellung bieten. Ferner wird durch die Reduktion der übertragenen Bilddatenmenge ein Verfahren ermöglicht, bei dem der Ansicht-Datensatz schnell vom Server zu dem Client übermittelt werden kann.

Sowohl durch die inkrementelle Übertragung als auch durch die Reduktion der Bilddaten kann eine hohe Verfügbarkeit der Bilddaten am Einsatzort erreicht werden.

In einer bevorzugten Ausgestaltung des Verfahrens umfasst der Detailstufen-Datensatz des höher aufgelösten Bilds die Referenz auf die Bilddaten zumindest teilweise anstatt der von dem Server berechneten Bilddaten. Dabei kann die Übertragung einer Referenz auf die Bilddaten eine geringere Datenmenge als die Bilddaten als solche aufweisen. Somit kann die zu übertragene Bilddatenmenge durch die Übertragung einer Referenz anstatt der Bilddaten reduziert werden. Beispielsweise brauchen identische Bilddaten, die bereits in dem Detailstufen-Datensatz eines niedriger aufgelösten Bilds übertragen wurden, nicht nochmals übertragen werden. Anstatt die redundante Information doppelt zu übertragen, kann in dem Detailstufen-Datensatz des höher aufgelösten Bilds eine Referenz auf die Bilddaten in dem Detailstufen-Datensatz des niedriger aufgelösten Bilds übertragen werden. Durch das Entfernen redundanter Information kann die Bilddatenmenge reduziert und dadurch die Übertragung der Bilddaten des virtuelle Objekts beschleunigt werden.

Ferner wird vorgeschlagen, dass die Bilddaten Farbdaten und/oder eine Referenz auf Farbdaten umfassen. Insbesondere können die Farbdaten Schwarz-Weiß-Farben, Graustufen oder RGB-Farben umfassen. Zudem kann in den Bilddaten auch eine Referenz auf bereits übertragene Farbdaten enthalten sein. Beispielsweise kann anstatt eines bereits übertragenen Farbwerts eine Referenz auf diesen Farbwert übertragen werden.

In einer bevorzugten Ausführung des Verfahrens umfassen die Bilddaten eine begrenzte Anzahl an unterschiedlichen Farbdaten, insbesondere weniger als 1024, bevorzugt weniger als 256. Bei einer begrenzten Anzahl an Farbwerten ergeben sich bei der Übertragung der Bilddaten besonders häufig Redundanzen. Anstatt diese Farbdaten erneut zu übertragen, können sie durch eine Referenz auf bereits übertragene Farbdaten ersetzt werden.

Bevorzugt umfassen die Bilddaten Helligkeitsdaten und/oder eine Referenz auf Helligkeitsdaten. Insbesondere bei einer Trennung der Bilddaten in Farbdaten und Helligkeitsdaten und/oder Referenzen auf Farbdaten und Helligkeitsdaten treten Redundanzen in den Bilddaten häufiger auf als bei der gemeinsamen Übertragung von Farb- und Helligkeitsdaten. Somit können zusätzlich zu den Redundanzen der Farbdaten auch Redundanzen der Helligkeitsdaten auftreten, die durch Referenzen auf Helligkeitsdaten ersetzt werden können. Beispielsweise können bei der Übertragung zweier unterschiedlicher Farbwerte mit gleicher Helligkeit zwei unterschiedliche Farbwerte, ein Helligkeitswert sowie eine Referenz auf den Helligkeitswert übertragen werden.

In einer vorteilhaften Ausgestaltung des Verfahrens erzeugt der Server den Ansicht-Datensatz in Form eines Quadtrees. Ein Quadtree ist eine Baumstruktur, bei der jeder Knoten direkt mit vier so genannten Tochterknoten in einer höheren Hierarchiestufe verbunden ist. Alternativ kann ein Knoten auch mit einer beliebigen Anzahl an Tochterknoten verbunden sein. Aufgrund der hierarchischen Struktur ist ein Quadtree besonders für die inkrementelle Übertragung von Bilddaten geeignet. Die Knoten der höchsten Hierarchiestufe weisen keine Verbindungen zu Tochterknoten auf. Ein derartiger Knoten, der keine Verbindungen zu Tochterknoten besitzt, wird Blatt genannt. Darüber hinaus können in der Baumstruktur aber auch Knoten einer niedrigeren Hierarchiestufe enthalten sein, die keine Verbindungen zu Tochterknoten aufweisen. Infolgedessen kann sich eine unsymmetrische Baumstruktur ergeben, in der die einzelnen Äste jeweils eine unterschiedliche Anzahl an Hierarchiestufen aufweisen.

Ferner wird vorgeschlagen, dass der Quadtree mehrere Knoten umfasst und ein Knoten jeweils die Bilddaten eines Segments des Bilds, insbesondere eines Pixels des Bilds, umfasst. Insbesondere können in dem Knoten Farbdaten und/oder Referenzen auf Farbdaten und/oder Helligkeitsdaten und/oder Referenzen auf Helligkeitsdaten gespeichert sein.

Es ist ferner vorteilhaft, wenn der Quadtree mindestens zwei Hierarchiestufen umfasst und eine Stufe des Quadtrees jeweils einen Detailstufen-Datensatz umfasst. Eine Hierarchiestufe des Quadtrees enthält viermal so viele Knoten wie die jeweils niedrigere Hierarchiestufe des Quadtrees. Ebenso kann eine Detailstufenansicht viermal so viele Pixel wie die jeweils niedriger aufgelöste Detailstufenansicht enthalten. Dadurch ergibt sich eine vorteilhafte hierarchische Strukturierung der unterschiedlich aufgelösten Detailstufenansichten des virtuellen Objekts.

Bevorzugt erzeugt der Server den Ansicht-Datensatz durch Traversierung des Quadtrees. Bei der Traversierung des Quadtrees werden die einzelnen Hierarchiestufen der Baumstruktur hintereinander übertragen. Somit kann ein Bilddatenstrom generiert werden, bei dem die einzelnen, den Hierarchiestufen des Quadtrees entsprechenden Detailstufen-Datensätze hintereinander übertragen werden. Bevorzugt beginnt die Traversierung des Quadtrees mit der Wurzel der Baumstruktur und setzt sich mit einer jeweils höheren Hierarchiestufe, die einem Detailstufen-Datensatz eines höher aufgelösten Bilds entspricht, fort.

Ferner wird vorgeschlagen, dass ein Knoten des Quadtrees ein Mutterknoten ist, der jeweils mit mehreren Tochterknoten verbunden ist, welche jeweils die Bilddaten eines in dem Segment enthaltenen Teilsegments, insbesondere eines Pixels, umfassen. Insbesondere kann der Mutterknoten vier Tochterknoten aufweisen, die den vier Quadranten des dem Mutterknoten zugeordneten Bildsegments entsprechen.

Wahlweise kann hierbei eine Toleranzgrenze für die in einem Knoten gespeicherten Bilddaten vorgesehen sein. Die Toleranzgrenze kann die Abweichungen der Farbwerte der Teilsegmente untereinander, insbesondere der Pixel, eines Bildsegments beschreiben. In gleicher Weise kann die Toleranzgrenze auch Abweichungen der Helligkeitswerte beschreiben. Bei einem Unterschreiten der Toleranzgrenze in einem Bildsegment, also bei ähnlichen Farbwerten und/oder Helligkeitswerten innerhalb des Bildsegments, muss dieses Segment nicht in weitere Teilsegmente zerlegt werden. Der dem Segment zugeordnete Mutterknoten des Quadtrees kann in diesem Fall ein Blatt ohne Verbindungen zu Tochterknoten sein. Dadurch, dass in allen Hierarchiestufen des Quadtrees Blätter vorhanden sein können, kann die zu übertragende Bilddatenmenge reduziert werden.

In einer vorteilhaften Ausgestaltung des Verfahrens wird zur Reduktion der Bilddatenmenge anstatt der in dem Tochterknoten gespeicherten Bilddaten eine Referenz auf die in dem Mutterknoten gespeicherten identischen Bilddaten gespeichert. Falls ein Tochterknoten Bilddaten umfasst, welche identisch mit denen in seinem Mutterknoten sind, kann in dem Tochterknoten anstatt der Bilddaten eine Referenz auf die in dem Mutterknoten gespeicherten identischen Bilddaten gespeichert werden. In diesem Sinne können beispielsweise Farbwerte, die bereits in einem Mutterknoten gespeichert sind, auf den Tochterknoten vererbt werden, indem der Tochterknoten eine Referenz auf die Bilddaten in dem Mutterknoten umfasst. In gleicher Weise können auch Helligkeitswerte oder andere Bilddaten vererbt werden.

Besonders vorteilhaft ist ein Verfahren, bei dem für das gesamte virtuelle Objekt ein Objekt-Header-Datensatz übertragen wird und bei dem der Ansicht-Datensatz eine Referenz auf den Objekt-Header-Datensatz enthält. In dem Objekt-Header-Datensatz können bei dem virtuellen Objekt oft benutzte Bilddaten, wie beispielsweise die am häufigsten vorkommenden Farbwerte und/oder Helligkeitswerte, enthalten sein. Diese Bilddaten müssen dann nicht mehrfach innerhalb des Ansicht-Datensatzes enthalten sein und übertragen werden. Stattdessen können im Ansicht-Datensatz Referenzen auf die jeweiligen Bilddaten in dem Objekt-Header-Datensatz enthalten sein. Durch die Verwendung eines Objekt-Header-Datensatzes kann die zu übertragende Bilddatenmenge zusätzlich reduziert werden.

In einer weiteren bevorzugten Ausgestaltung des Verfahrens wird für jede Ansicht ein Ansicht-Header-Datensatz übertragen, und der Detailstufen-Datensatz enthält eine Referenz auf den Ansicht-Header-Datensatz. Der Ansicht-Header-Datensatz kann dabei für die jeweilige Ansicht oft benutzte Bilddaten, wie beispielsweise die am häufigsten vorkommenden Farb-und/oder Helligkeitswerte, enthalten. Anstatt die jeweiligen Bilddaten in den Detailstufen-Datensätzen mehrfach zu übertragen, kann eine Referenz auf die Bilddaten im Ansicht-Header-Datensatz vorgesehen sein. Durch dieses Vorgehen kann die Bilddatenmenge weiter reduziert werden.

Ferner wird vorgeschlagen, dass die Übertragung eines Ansicht-Datensatzes abgebrochen wird, wenn der Benutzer die Übertragung eines anderen Ansicht-Datensatzes anfordert, und dass der angeforderte Ansicht-Datensatz übertragen wird. Bei der Übertragung eines Ansicht-Datensatzes kann die jeweilige Ansicht beim Client inkrementell aufgebaut werden. Am Anfang der Übertragung kann ein erster Detailstufen-Datensatz einer ersten Ansicht übertragen werden und ein niedrig aufgelöstes Bild dieser Ansicht am Client dargestellt werden. Mit der Übertragung weiterer Detailstufen-Datensätze mit höherer Auflösung kann die Darstellung dieser Ansicht am Client weiter verfeinert werden. Während des Aufbaus der höher aufgelösten Bilder der ersten Ansicht kann der Benutzer eine neue, zweite Ansicht des Objekts auswählen, bevor die Übertragung des ersten Ansicht-Datensatzes abgeschlossen ist. In diesem Fall wird auf Seiten des Servers direkt mit der Übertragung des neu angeforderten, zweiten Ansicht-Datensatzes begonnen. Durch dieses interaktive Verfahren ergibt sich ein schneller Bildaufbau bei Änderungen der Ansicht durch den Benutzer.

Bevorzugt wird die Menge der Bilddaten, insbesondere der Primärfarben, eines Segments des Bilds, insbesondere eines Pixels des Bilds, durch Quantisierung reduziert. Durch die Quantisierung der Bilddaten können nahe beieinander liegende Bilddatenwerte zu einem Bilddatenwert zusammengefasst werden. Dadurch wird eine weitere Reduktion der Bilddatenmenge ermöglicht.

Weiter bevorzugt wird die Menge der Bilddaten durch Lauflängencodierung reduziert. Durch die Lauflängencodierung der Bilddaten können Wiederholungen von identischen Bilddaten komprimiert werden. Diese Kompression kann zur Reduktion der Bilddatenmenge beitragen.

Durch die Erfindung kann ferner ein Verfahren zur Montage an einem technischen Objekt, insbesondere einem militärischen Fahrzeug und/oder einer Waffe, bereitgestellt werden, wobei der Monteur auf einem Client eine Ansicht eines dem technischen Objekt entsprechenden virtuellen Objekts aufruft, um Bilddaten des virtuellen Objekts zu erhalten, und wobei die Bilddaten mittels des erfindungsgemäßen Bildübertragungsverfahrens übertragen werden. Dadurch kann eine erhöhte Sicherheit der zur Unterstützung der Montage benötigten Darstellungen bei gleichzeitig ausreichender Verfügbarkeit der Daten gewährleistet werden.

Ferner können bei dem Verfahren zur Montage an einem technischen Objekt auch die vorstehend beschriebenen Ausgestaltungen des Bildübertragungsverfahrens in vorteilhafter Weise eingesetzt werden.

Weitere Einzelheiten und Vorteile der Erfindung werden nachfolgend anhand eines in den Zeichnungen dargestellten Ausführungsbeispiels erläutert. Darin zeigen:
Fig. 1 eine schematische Darstellung eines Bildübertragungssystems;
Fig. 2 eine Ansicht eines virtuellen Objekts;
Fig. 3 mehrere Detailstufenansichten des virtuellen Objekts aus Fig. 2, die in einem Ansicht-Datensatz enthalten sind;
Fig. 4 eine schematische Darstellung der Datenstruktur zur Repräsentation des Ansicht-Datensatzes;
Fig. 5 eine zeitliche Darstellung des Bildübertragungsverfahrens in einem Ablaufdiagramm; und
Fig. 6 eine schematische Darstellung eines Header-Datensatzes.

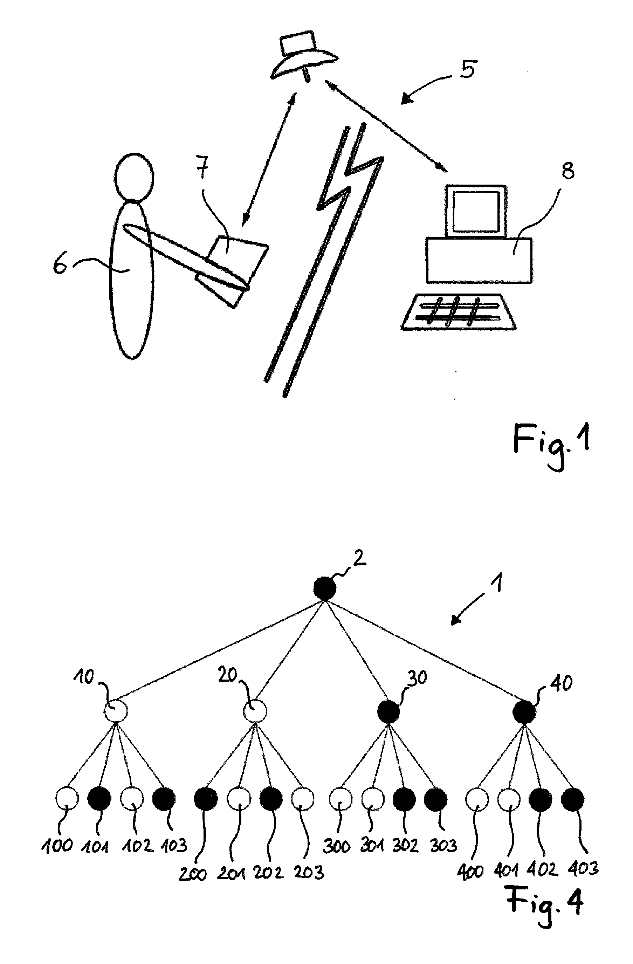

Das in der Fig. 1 dargestellte Bildübertragungssystem kann zur Unterstützung der Montage an militärischen Fahrzeugen und/oder Waffen am Einsatzort eingesetzt werden. Der Benutzer 6 am Einsatzort verfügt über einen Client 7, der als Computer ohne besondere Graphik- oder Prozessorleistung und somit handlich ausgestaltet sein kann. Als Client 7 kann auch ein Tablet-PC mit berührungsempfindlichem Display insbesondere ohne Tastatur benutzt werden. Der Client 7 wird als Anzeigevorrichtung betrieben, die selber keine Bilddaten berechnet, sondern diese von einem Server 8 empfängt und auf einer Anzeige darstellt. Der Monteur 6 kann daraufhin die Montagearbeiten durchführen.

Die Verbindung zwischen dem Client 7 und dem Server 8 kann grundsätzlich kabelgebunden oder kabellos hergestellt werden. Um aber eine Bildübertragung von dem Server 8 an einen Client 7 an einem entlegenen Einsatzort zu ermöglichen, ist der Client 7, wie in Fig.1 dargestellt, über eine Satellitenverbindung 5 mit dem Server 8 verbunden. In einem typischen Anwendungsfall ist der Server 8 an einem geschützten Ort fernab des Einsatzortes lokalisiert. Beispielsweise kann der Server 8 in einer militärischen Basis oder beim Hersteller des militärischen Fahrzeugs und/oder der Waffe aufgestellt sein. Durch dieses Konzept können sensible Konstruktionsdaten des militärischen Fahrzeugs und/oder der Waffe an einem geschützten Ort gehalten werden. Beim Verlust des Client 7 am Einsatzort geht somit lediglich die Möglichkeit der Anzeige des virtuellen Objekts am Einsatzort verloren. Da der Client 7 lediglich als Anzeigemedium im Sinne eines Remote-Desktop des Servers 8 verwendet wird, sind auf dem Client keine Daten gespeichert, die ohne eine Verbindung 5 zum Server 8 Zugriff auf die zur Wartung nötigen Daten des militärischen Fahrzeugs und/oder der Waffe erlauben.

Wird bei Arbeiten an einem militärischen Fahrzeug und/oder einer Waffe z.B. Zugriff auf eine virtuelle Montageanleitung benötigt, kann der Benutzer 6 den Client 7 aktivieren und eine Satellitenverbindung 5 zum Server 8 aufbauen. Nach dem Verbindungsaufbau kann der Benutzer 6 am Client 7 den entsprechenden Wartungsgegenstand auswählen. Daraufhin kann der Benutzer 6 am Client 7 mit Hilfe einer grafischen Bedienoberfläche eine Ansicht des virtuellen Wartungsgegenstands wählen. Der Client 7 sendet daraufhin über die Satellitenverbindung 5 eine Anforderung an den Server 8, den dieser Ansicht entsprechenden Ansicht-Datensatz zu erzeugen.

Die Erzeugung des Bilds auf Seiten des Servers 8 gliedert sich in folgende Schritte: In einem ersten Schritt wird die Ansicht des virtuellen Objekts entsprechend der Auswahl des Benutzers 6 am Client 7 gerendert. In einem zweiten Schritt wird der Ansicht-Datensatz der gerenderten Ansicht in einer Quadtree-Datenstruktur mit beispielsweise einer Vierfach-Verästelung gespeichert. Abschließend wird aus dem als Quadtree-Baumstruktur vorliegenden Ansicht-Datensatz ein Datenstrom generiert. Zur Generierung des über die Satellitenverbindung 5 übertragenen Datenstroms wird der Quadtree derart traversiert, dass die Knoten einer Hierarchiestufe zusammen in einem Detailstufen-Datensatz übertragen werden und die Hierarchiestufen in aufsteigender Reihenfolge übertragen werden. Dabei kann der Datenstrom mehrere Datenpakete umfassen und gemäß dem Internet Protocol übertragen werden.

Durch den von der hierarchischen Baumstruktur abgeleiteten Datenstrom ergibt sich eine fehlertolerante Übertragung. Sollten bei der Übertragung Fehler auftreten, können diese zwar nicht korrigiert werden, die Übertragung als solche bricht aber nicht ab. Ferner wird durch Übertragungsfehler lediglich die Anzeige der Detailstufen-Datensätze in denen Fehler aufgetreten sind am Client 7 gestört. Die vorhergehend und nachfolgend gezeigten Detailstufen sind am Client 7 nicht gestört. Dadurch wird eine Anzeige des virtuellen Objekts am Client 7 ermöglicht, bei der der Datenstrom trotz fehlerhafter Bits nicht abbricht.

Beim Empfang der Bilddaten durch den Client 7 wird der vom Server 8 über die Satellitenverbindung 5 übermittelte Datenstrom gelesen und die ursprünglich verwendete Quadtree-Datenstruktur aus dem Datenstrom rekonstruiert. Die einzelnen Hierarchiestufen des Quadtrees werden hintereinander übertragen und entsprechen den einzelnen, Bilddaten enthaltenden Detailstufen-Datensätzen der Ansicht. Nach Abschluss der Übertragung eines Detailstufen-Datensatzes können die Bilddaten dieses Detailstufen-Datensatzes bereits angezeigt werden. Somit kann während der Rekonstruktion der Datenstruktur bereits eine Anzeige des Bilds am Client 7 erfolgen.

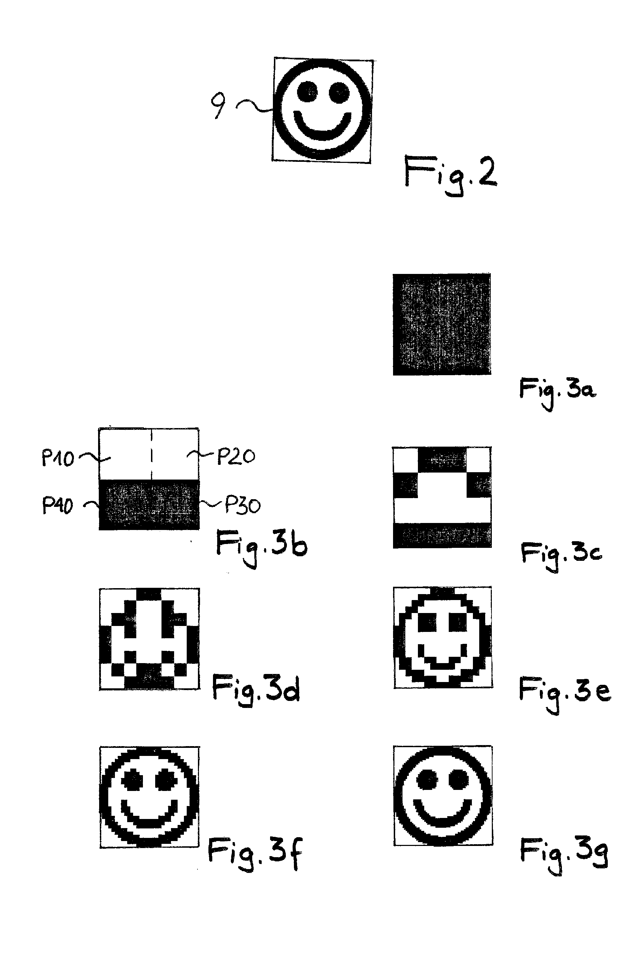

In der Fig. 2 ist eine Ansicht eines zu Darstellungszwecken vereinfachten virtuellen Objekts 9 dargestellt, anhand der das erfindungsgemäße Verfahren zur inkrementellen Übertragung von Bilddaten eines virtuellen Objekts im Folgenden dargelegt werden soll.

Das in der Fig. 2 dargestellte virtuelle Objekt 9 dient dabei als symbolischer Platzhalter für ein militärisches Fahrzeug und/oder eine Waffe. Bei der Übertragung von Bilddaten des virtuellen Objekts 9 wird für die in Fig. 2 dargestellte Ansicht ein Ansicht-Datensatz von dem Server 8 erzeugt. Der Ansicht-Datensatz kann sieben Detailstufen-Datensätze umfassen, die den in der Fig. 3 dargestellten unterschiedlich aufgelösten Bildern der gleichen Ansicht entsprechen. Dabei stellt das Bild der Fig. 3a das Bild mit der geringsten Auflösung und das Bild der Fig. 3g das Bild mit der höchsten Auflösung dar.

Der Ansicht-Datensatz ist derart strukturiert, dass der Detailstufen-Datensatz des Bilds mit der niedrigsten Auflösung, vgl. Fig. 3a, als Erstes von dem Server 8 zu dem Client 7 übertragen wird. Danach wird der Detailstufen-Datensatz des Bilds mit der zweitniedrigsten Auflösung übertragen, vgl. Fig. 3b. Im Weiteren werden die restlichen Detailstufen-Datensätze schrittweise aufsteigend geordnet nach ihrer Auflösung von dem Server 8 zu dem Client 7 übertragen.

Bei dieser inkrementellen Übertragung der Ansicht des virtuellen Objekts aus Fig. 2 kann die Anzeige des zum jeweiligen Detailstufen-Datensatz gehörigen Bildes am Client 7 direkt nach Empfang des Detailstufen-Datensatzes erfolgen. Somit kann die Anzeige am Client 7 mit der Übertragung der Detailstufen-Datensätze schrittweise detailreicher werden. Dadurch wird es dem Benutzer 6 ermöglicht, bereits nach Übertragung weniger Detailstufen-Datensätze der Ansicht des virtuellen Objekts 9 ein Bild des virtuellen Objekts 9 mit geringer Auflösung zu erfassen und möglicherweise darauf zu reagieren, beispielsweise durch die Auswahl einer anderen Ansicht.

Ein Bild einer Detailstufe unterscheidet sich von dem Bild der Detailstufe mit der jeweils niedrigeren Auflösung dadurch, dass es die vierfache Menge an Pixeln aufweist. Dabei wird jedes Pixel der niedriger aufgelösten DetailstufenAnsicht in vier Subpixel der höher aufgelösten Detailstufenansicht zerlegt. Beispielsweise weist das Bild der ersten Detailstufe in Fig. 3a lediglich ein Pixel auf. Das Bild der zweiten Detailstufe in Fig. 3b weist vier Pixel P10, P20, P30, P40 auf, die durch Zerlegung des Pixels der Fig. 3a in vier Quadranten aus diesem hervorgehen. Das Bild der dritten Detailstufe in Fig. 3c umfasst 16 Pixel, wobei diese aus den vier Pixeln P10, P20, P30, P40 des Bilds der niedrigeren Detailstufe in Fig. 3b hervorgehen. Die Bilder in den Fig. 3d-3g der folgenden Detailstufen umfassen entsprechend 32, 128, 512 sowie 2048 Pixel.

Die bei dem erfindungsgemäßen hierarchischen Bildübertragungsverfahren verwendete Datenstruktur soll im Folgenden anhand der Fig. 4 erläutert werden. Fig. 4 zeigt einen so genannten Quadtree 1, eine hierarchische Baumstruktur, bei der jeder Knoten jeweils mit vier Tochterknoten verbunden ist. Nur die Knoten der höchsten Hierarchiestufe, die so genannten Blätter, weisen keine Tochterknoten auf. Ferner können in nicht dargestellter Weise in der Baumstruktur auch in niedrigeren Hierarchiestufen Knoten enthalten sein, die keine Tochterknoten aufweisen.

Der Server 8 codiert jeweils einen Ansicht-Datensatz in einen Quadtree. Ein Quadtree, der einem Ansicht-Datensatz mit den Detailstufen-Datensätzen der ersten drei Detailstufen, vgl. Fig. 3a bis Fig. 3c, entspricht, ist in Fig. 4 dargestellt. Die erste Hierarchiestufe des Quadtrees umfasst lediglich einen Knoten 2 und entspricht dem ersten Detailstufen-Datensatz, dessen Bild in Fig. 3a dargestellt ist. Die zweite Hierarchiestufe des Quadtrees 1 umfasst vier Knoten 10, 20, 30, 40 und entspricht dem Detailstufen-Datensatz der zweiten Stufe mit den Pixel P10, P20, P30 und P40, dessen Bild in Fig. 3b dargestellt ist. Die dritte Hierarchiestufe des Quadtrees umfasst 16 Knoten 100-103, 200-203, 300-303, 400-403 und entspricht dem Detailstufen-Datensatz der dritten Stufe, dessen Bild in Fig. 3c dargestellt ist.

Da das virtuelle Objekt 9 in diesem Ausführungsbeispiel ein Schwarz-Weiß-Bild ist, umfassen die Knoten des Quadtrees 1 lediglich Schwarz-Weiß-Farbinformationen. Bei dem erfindungsgemäßen Verfahren können die Knoten des Quadtrees darüber hinaus aber auch Grauwerte und/oder RGB-Farbwerte oder Helligkeitswerte oder sonstige Farbinformationen umfassen. Insbesondere können in den Knoten des Quadtrees die am häufigsten vorkommenden Farben des jeweiligen Bildsegments, die so genannten Primärfarben, gespeichert werden.

Als besonders vorteilhaft hat es sich herausgestellt, wenn 1 bis 4 Primärfarben in einem Knoten enthalten sind und die Farbwerte der Pixel des jeweiligen Bildsegments bitweise codiert sind. Beispielsweise werden zur Repräsentation eines Pixels bei einer bitweisen Codierung und vier Primärfarben lediglich 2 bit benötigt.

In dem hier gezeigten Ausführungsbeispiel wird in einem Knoten des Quadtree jeweils die am häufigsten vorkommende Farbe innerhalb des dem Knoten entsprechenden Bildsegments gespeichert. Dies bedeutet z.B. für die erste Hierarchiestufe des Quadtrees 1 in Fig. 4, welche ein Bild mit einem Pixel umfasst, vgl. auch Fig. 3a, dass dieses Pixel, gemäß der in der Ansicht des virtuellen Objekts 9 in Fig. 2 am häufigsten vorkommenden Farbe, schwarz ist. Infolgedessen umfasst der einzige Knoten 2 der ersten Hierarchiestufe des Quadtrees 1 den Farbwert Schwarz.

Die vier Tochterknoten 10, 20, 30, 40 in der zweiten Hierarchiestufe des Knotens 2 in der ersten Hierarchiestufe entsprechen den vier Pixeln P10, P20, P30, P40 des Bilds in der Fig. 3b. Die beiden oberen Pixel P10. P20 werden durch die Knoten 10 und 20 repräsentiert und umfassen den Farbwert Weiß, während die beiden unteren Pixel P30, P40 durch die Knoten 30 und 40 repräsentiert werden und den Farbwert Schwarz umfassen. Gleiches gilt für die 16 Knoten der dritten Hierarchiestufe des Quadtrees 1, beispielsweise repräsentieren die vier Knoten 100, 101, 102, 103 die vier Pixel in der oberen linken Ecke der Fig. 3c. Beginnend mit dem oberen linken Pixel speichern sie fortlaufend im Uhrzeigersinn die Farbwerte Weiß, Schwarz, Weiß, Schwarz.

Bei der Speicherung und Übertragung der Bilddaten in dem Quadtree entstehen dadurch Redundanzen, dass ein identischer Farbwert in mehreren Knoten, welche unterschiedliche Pixel repräsentieren, gespeichert ist. Beispielsweise ist der Farbwert Schwarz sowohl im Knoten 2 als auch in den Knoten 30, 40 sowie 101, 103, 200, 202, 302, 303, 402 und 403 gespeichert. Gemäß der Erfindung wird bei der Übertragung des zweiten Detailstufen-Datensatzes in den Knoten 30 und 40 anstatt des Farbwertes Schwarz eine Referenz auf den in ihrem Mutterknoten 2 gespeicherten Farbwert Schwarz übertragen. Die Referenz zeigt auf eine Adresse des im Mutterknoten gespeicherten Farbwerts. Durch diese Vererbung muss der Farbwert Schwarz nicht nochmals für die Knoten 30 und 40 übertragen werden. Bei der Speicherung der Referenz auf den Farbwert im Mutterknoten wird weniger Speicherplatz benötigt als bei der Speicherung des Farbwerts als solchem. Daher lässt sich durch die Übertragung einer Referenz auf den Farbwert anstatt des Farbwerts eine Reduktion der zu übertragenen Bilddaten erzielen.

Die Übertragung einer Referenz auf einen Farbwert in einem Mutterknoten lässt sich beispielsweise durch ein im Tochterknoten definiertes Bit realisieren. Ist dieses Bit auf "1" gesetzt, wird der Farbwert des Mutterknotens referenziert, ist dieses Bit auf "0" gesetzt, wird der Farbwert des Mutterknoten nicht referenziert. In diesem Fall muss ein neuer Farbwert mit z.B. 10 bit übertragen werden. Wird jedoch anstatt eines mit 10 bit codierten Farbwertes eine Referenz auf den Mutterknoten übertragen, kann anstatt der insgesamt 11 bit des Referenzbits (1 bit) und des Farbwerts (10 bit) nur 1 bit für das Referenzbit übertragen werden. In diesem Fall ergibt sich eine Reduktion der Bilddatenmenge um 90 %.

Die Übertragung von Referenzen anstatt der Bilddaten ist besonders effektiv bei Ansichten von virtuellen Objekten, die nur wenige unterschiedliche Farben aufweisen. In diesem Fall ist die Wahrscheinlichkeit, dass die in den Tochterknoten gespeicherten Bilddaten identisch zu denen in den jeweiligen Mutterknoten sind besonders hoch. Dadurch ist auch die Wahrscheinlichkeit hoch, den Farbwert im Tochterknoten durch eine Referenz zu ersetzen.

In gleicher Weise eignet sich das beschriebene Verfahren für die Übertragung von Ansichten die eine gleichmäßige Helligkeit aufweisen. Werden Farbwerte und Helligkeitswerte getrennt voneinander für jedes Bildsegment oder jedes Pixel übertragen, so ergibt sich in diesem Fall eine erhöhte Wahrscheinlichkeit für Redundanzen der Helligkeitswerte. Somit können besonders oft in den Tochterknoten enthaltene Helligkeitswerte durch Referenzen auf die in den Mutterknoten enthaltenen Helligkeitswerte ersetzt werden.

Wie für die ersten Hierarchiestufen beschrieben, wird in gleicher Weise auch in den Knoten 302, 303 sowie 402 und 403 anstatt des Farbwertes Schwarz eine Referenz auf den in dem jeweiligen Mutterknoten 30 bzw. 40 gespeicherten Farbwert übertragen. Da in den Knoten 30 und 40 bereits eine Referenz auf den Farbwert im Knoten 2 gespeichert ist, enthalten die Knoten 302, 303, 402 und 403 eine Referenz auf eine Referenz eines Farbwertes.

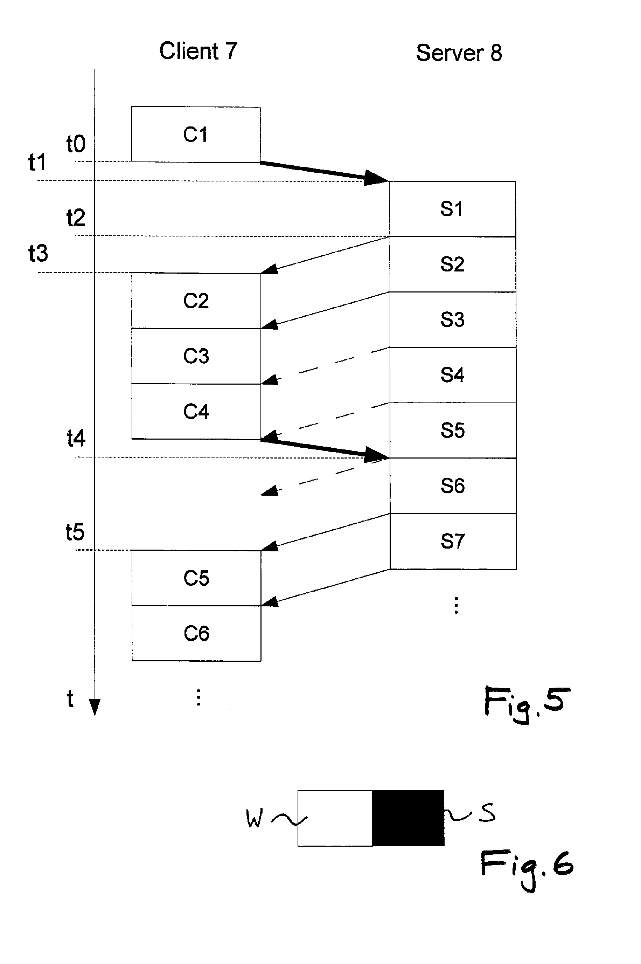

Neben Referenzen auf Werte in Mutterknoten können in den Knoten auch Referenzen auf so genannte Header-Datensätze enthalten sein. Ein Header-Datensatz kann beispielsweise für das gesamte virtuelle Objekt als Objekt-Header-Datensatz und/oder für eine bestimmte Ansicht des virtuellen Objekts als Ansicht-Header-Datensatz übertragen werden. In einem Header-Datensatz können oft benutzte Farbwerte oder Helligkeitswerte enthalten sein. Ein Header-Datensatz für das in Fig. 2 dargestellte schwarz-weiße virtuelle Objekt 9 ist in Fig. 6 dargestellt. Der Header-Datensatz enthält die beiden am häufigsten vorkommenden Farbwerte der Farben Schwarz (S) und Weiß (W). Die Knoten des Quadtrees könnten demnach anstatt der Farbwerte Schwarz und Weiß Referenzen auf die in dem Header-Datensatz gespeicherten Farbwerte enthalten. Durch die Verwendung eines Header-Datensatzes kann die Bilddatenmenge nochmals reduziert werden, da auf die im Header-Datensatz gespeicherten Bilddaten aus allen Knoten des Quadtrees zugegriffen werden kann. Durch das erfindungsgemäße Verfahren wird eine Bildübertragung von dem Server 8 zum Client 7 über eine schmalbandige Satellitenverbindung 5 ermöglicht, die sich trotz der geringen Bandbreite der Verbindung 5 durch eine ausreichend schnelle Verfügbarkeit auszeichnet. Der Ablauf des interaktiven Übertragungsverfahrens ist beispielhaft in der Fig. 5 dargestellt. In einem ersten Schritt C1 wählt der Benutzer 6 auf Seiten des Clients 7 eine Ansicht des virtuellen Objekts aus. Diese Anforderung wird zum Zeitpunkt t0 vom Client 7 über die Satellitenverbindung 5 zum Server 8 übermittelt. Nach dem Empfangen dieser Anforderung auf Seiten des Servers 8 wird die Berechnung der angeforderten Ansicht auf dem Server 8 zum Zeitpunkt t1 begonnen. In einem ersten Schritt S1 werden die Bilddaten des Detailstufen-Datensatzes des am niedrigsten aufgelösten Bilds, der Stufe 1, zum Zeitpunkt t2 übermittelt. Nach der Übertragung über die Satellitenverbindung 5 beginnt die Darstellung der Bilddaten auf dem Client 7 mit dem Zeitpunkt t3. Zur gleichen Zeit werden auf dem Server 8 die weiteren Detailstufen-Datensätze S2, S3, S4, S5 mit jeweils höherer Auflösung erzeugt und von dem Server zum Client übertragen.

Aufgrund der inkrementellen Übertragung der Bildinformation und insbesondere der stufenweisen Verbesserung des Detailgrades kann der Benutzer schon früh abschätzen, ob die übertragene Ansicht seinen Erfordernissen genügt und inwiefern er eine neue räumliche Ausrichtung der Ansicht des dreidimensionalen Objekts vornehmen möchte. In dem in Fig. 5 dargestellten Beispiel fordert der Benutzer 6 nach der Darstellung der ersten beiden Detailstufen-Datensätze C2, C3 der zur ersten Auswahl C1 gehörigen Ansicht eine neue Ansicht an. Dies geschieht im Schritt C4, während der Server noch mit der Berechnung und Übertragung des Ansicht-Datensatzes der ersten Auswahl beschäftigt ist.

Sobald die Anforderung der neuen Auswahl den Server 8 zum Zeitpunkt t4 erreicht, wird die Übertragung des ersten Ansicht-Datensatzes S1, S2, S3, S4, S5 abgebrochen und mit der Übertragung des zur neuen Auswahl gehörigen Ansicht-Datensatzes S6, S7 begonnen. Der neue Ansicht-Datensatz S6, S7 wird vom Server 8 zum Client 7 übertragen und ab dem Zeitpunkt t5 auf der Anzeige des Clients dargestellt.

Bei dem beschriebenen Bildübertragungsverfahren können weitere Methoden zur Reduktion der Bilddatenmenge angewendet werden. Beispielsweise kann die Menge der Bilddaten, insbesondere der Farbwerte, durch Quantisierung der Farbwerte reduziert werden.

Ferner kann die Menge der Bilddaten auch durch eine Lauflängencodierung vermindert werden. Der Einsatz einer Lauflängencodierung ist insbesondere bei Bildsegmenten mit 16x16 Pixel und mehr vorteilhaft.

Durch das beschriebene inkrementelle Verfahren zur Übertragung von Bilddaten kann der Benutzer auf Seiten des Clients 7 insbesondere bei Verbindungen mit geringer Bandbreite schnell mit dem Server 8 interagieren.

### Bezugszeichen:

- 1: Quadtree
- 2: Knoten
- 5: Satellitenverbindung
- 6: Benutzer
- 7: Client
- 8: Server
- 9: Objekt
- 10: Knoten
- 20: Knoten
- 30: Knoten
- 40: Knoten
- C1, C4: Auswahlschritt
- C2, C3, C5, C6: Darstellungs-Schritt
- S1, S2, S3, S4, S5, S6, S7: Berechnungs-Schritt
- 100 - 403: Knoten
- t0-t4: Zeitpunkt
- S, W: Farbwert

## Patentansprüche

1. Verfahren zur Übertragung von Bilddaten eines virtuellen Objekts (9), insbesondere eines militärischen Fahrzeugs und/oder einer Waffe, von einem Server (8) zu einem Client (7),
wobei ein Benutzer (6) auf der Seite des Clients (7) eine Ansicht des Objekts auswählt,
wobei der dieser Ansicht entsprechende Ansicht-Datensatz von dem Server (8) erzeugt wird,
wobei der Ansicht-Datensatz mindestens zwei Detailstufen-Datensätze mit Bilddaten umfasst, die unterschiedlich aufgelösten Bildern der gleichen Ansicht entsprechen,
wobei zunächst der Detailstufen-Datensatz des Bilds mit der niedrigeren Auflösung und danach der Detailstufen-Datensatz des Bilds mit der höheren Auflösung von dem Server (8) an den Client (7) übertragen wird und
wobei der Detailstufen-Datensatz des höher aufgelösten Bilds zur Reduktion der übertragenen Bilddatenmenge eine Referenz auf die Bilddaten in dem Detailstufen-Datensatz des niedriger aufgelösten Bilds umfasst.

2. Verfahren nach Anspruch 1, **dadurch gekennzeichnet, dass** der Detailstufen-Datensatz des höher aufgelösten Bilds die Referenz auf die Bilddaten zumindest teilweise anstatt der von dem Server (8) berechneten Bilddaten umfasst.

3. Verfahren nach einem der vorhergehenden Ansprüche, **dadurch gekennzeichnet, dass** die Bilddaten Farbdaten und/oder eine Referenz auf Farbdaten umfassen.

4. Verfahren nach einem der vorhergehenden Ansprüche, **dadurch gekennzeichnet, dass** die Bilddaten eine begrenzte Anzahl an unterschiedlichen Farbdaten umfassen, insbesondere weniger als 1024, bevorzugt weniger als 256.

5. Verfahren nach einem der vorhergehenden Ansprüche, **dadurch gekennzeichnet, dass** die Bilddaten Helligkeitsdaten und/oder eine Referenz auf Heltigkeitsdaten umfassen.

6. Verfahren nach einem der vorhergehenden Ansprüche, **dadurch gekennzeichnet, dass** der Server den Ansicht-Datensatz in Form eines Quadtrees (1) erzeugt.

7. Verfahren nach Anspruch 6, **dadurch gekennzeichnet, dass** der Quadtree mehrere Knoten (10, 20, 30, 40) umfasst und ein Knoten (10, 20, 30, 40) jeweils die Bilddaten eines Segments des Bilds, insbesondere eines Pixels (P10, P20, P30, P40) des Bilds umfasst.

8. Verfahren nach einem der Ansprüche 6 oder 7 **dadurch gekennzeichnet, dass** der Quadtree (1) mindestens zwei Hierarchiestufen umfasst und eine Hierarchiestufe des Quadtrees (1) jeweils einen Detailstufen-Datensatz umfasst.

9. Verfahren nach einem der Ansprüche 6 bis 8, **dadurch gekennzeichnet, dass** der Server den Ansicht-Datensatz durch Traversierung des Quadtree erzeugt.

10. Verfahren nach einem der Ansprüche 7 bis 9, **dadurch gekennzeichnet, dass** ein Knoten des Quadtrees (1) ein Mutterknoten (2) ist, der jeweils mit mehreren Tochterknoten (10, 20, 30, 40) verbunden ist, welche jeweils die Bilddaten eines in dem Segment enthaltenen Teilsegments, insbesondere eines Pixels (P10, P20, P30, P40), umfassen.

11. Verfahren nach Anspruch 10, **dadurch gekennzeichnet, dass** zur Reduktion der Bilddatenmenge anstatt der in dem Tochterknoten gespeicherten Bilddaten eine Referenz auf die in dem Mutterknoten gespeicherten identischen Bilddaten gespeichert wird.

12. Verfahren nach einem der vorhergehenden Ansprüche, **dadurch gekennzeichnet, dass** für das gesamte virtuelle Objekt (9) ein Header-Datensatz übertragen wird und dass der Ansicht-Datensatz eine Referenz auf den Header-Datensatz enthält.

13. Verfahren nach einem der vorhergehenden Ansprüche, **dadurch gekennzeichnet, dass** für jede Ansicht ein Header-Datensatz übertragen wird und dass der Detaitstufen-Datensatz eine Referenz auf den Header-Datensatz enthält.

14. Verfahren nach einem der vorhergehenden Ansprüche, **dadurch gekennzeichnet, dass** die Übertragung eines Ansicht-Datensatzes abgebrochen wird, wenn der Benutzer die Übertragung eines anderen Ansicht-Datensatzes anfordert und dass der angeforderte Ansicht-Datensatz übertragen wird.

15. Verfahren nach einem der vorhergehenden Ansprüche, **dadurch gekennzeichnet, dass** die Menge der Bilddaten, insbesondere der Primärfarben, eines Segments des Bilds, insbesondere eines Pixels des Bilds, durch Quantisierung reduziert wird.

16. Verfahren nach einem der vorhergehenden Ansprüche, **dadurch gekennzeichnet, dass** die Menge der Bilddaten durch Lauflängenkodierung reduziert wird.

17. Verfahren zur Montage an einem technischen Objekt, insbesondere einem militärischen Fahrzeug und/oder einer Waffe, wobei der Monteur (6) auf einem Client (7) eine Ansicht eines dem technischen Objekt entsprechenden virtuelle Objekts (9) aufruft, um Bilddaten des virtuellen Objekts (9) zu erhalten, und wobei die Bilddaten mittels eines Verfahrens nach einem der vorhergehenden Ansprüche übertragen werden.
